# EUROPEAN PATENT SPECIFICATION

(11) **EP 0 443 562 B1**
(45) Date of publication and mention of the grant of the patent: **21.05.1997**
(21) Application number: 91102502.1
(22) Date of filing: 21.02.1991
(51) Int. Cl.: H04M 1/72, H04M 1/65

(54) **Cordless telephone**
Schnurloses Telefon
Téléphone sans fil

(30) Priority: 23.02.1990 JP 43826/90
(43) Date of publication of application: 28.08.1991
(73) Proprietor: SONY CORPORATION, Tokyo (JP)
(72) Inventor: Ohnishi,Kanji, c/o Sony Corporation, Shinagawa-ku, Tokyo (JP); Yamagata, Masato, Shinagawa-ku Tokyo (JP)
(74) Representative: Schmidt-Evers, Jürgen, Dipl.-Ing.

(56) References cited:
- US-A- 4 882 746
- PATENT ABSTRACTS OF JAPAN vol. 14, no. 451 (E-984) 27 September 1990 & JP-A-21 79 131
- PATENT ABSTRACTS OF JAPAN vol. 5, no. 103 (E-64) 3 July 1981 & JP-A-56 046 343
- PATENT ABSTRACTS OF JAPAN vol. 10, no. 313 (E-448) 24 October 1986 & JP-A-61 123 349
- PATENT ABSTRACTS OF JAPAN vol. 8, no. 185 (E-262) 24 August 1984 & JP-A-59 074 739

## Description

The present invention generally relates to cordless telephones and, more particularly, is directed to a cordless telephone having an automatic telephone answering machine function.

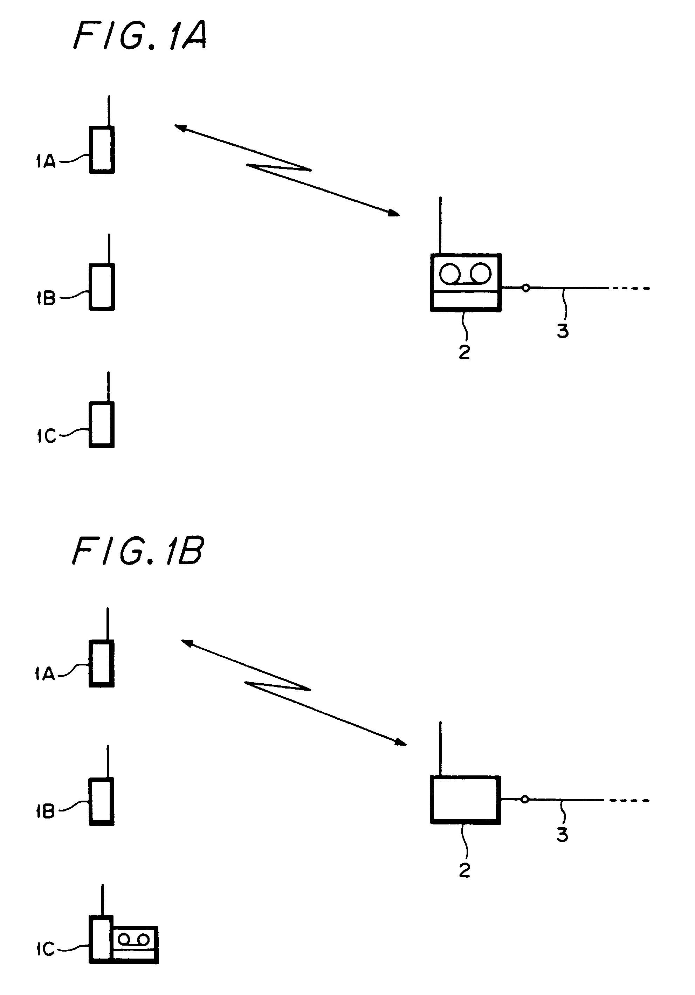

Conventionally, a cordless telephone is given a telephone answering machine (hereinafter simply referred to as a TAM) function, i.e., automatic response telephone function or automatic answering telephone function by systems shown in Figs. 1A and 1B.

More specifically, in Figs. 1A and 1B, reference numerals 1A to 1C denote handset units (remote stations), 2 a base unit (master station) and 3 a telephone line network (outside line).

In the case of the system shown in Fig. 1A, the handset units 1A, 1B and 1C are the same as those of an ordinary cordless telephone while a base unit 2 has a TAM function. This base unit 2 houses a tape recorder to reproduce a message (this message will be hereinafter referred to as an answering message) given to the other party when an incoming call is arrived and to record a message (this message will be hereinafter referred to as a business message) left by the calling party.

In the case of the system shown in Fig. 1B, the handset units 1A, 1B and the base unit 2 are the same as those of the ordinary cordless telephone while the handset unit 1C is given the TAM function. Accordingly, the handset unit 1C houses a tape recorder and an answering message and a business message are reproduced and recorded by this tape recorder.

In the case of the above-mentioned conventional cordless telephone systems shown in Figs. 1A and 1B, in order to hear the recorded business message, the user must reach to the base unit 2 or the handset unit 1C having the TAM function and push an operation button thereof, which deprives the cordless telephone of its advantages.

JP-A-59 07 47 39 discloses a cordless telephone apparatus including a base unit and a handset unit according to the preamble of claim 1. The base unit has an automatic telephone answering device. In this telephone apparatus, when the command is transmitted from the handset unit to the base unit, the automatic telephone answering device reproduces the message stored therein. The reproduced message is transmitted from the base unit to the handset unit. As a result the message is outputted from the handset unit and the user can monitor or listen to the message stored in the automatic telephone answering device. The automatic telephone answering device is located in the base unit and is directly linked to the base unit. All incoming messages are stored in a central automatic telephone answering device. In the reproduction mode the user must get access to the master station directly or through the radio between the slave station and the master station.

It is the object of the present invention to provide a cordless telephone for storing the incoming messages in one or more portable telephone answering machine units locally provided at the users location.

The object is solved by the features of claim 1.

The features and advantages of the present invention will become apparent from the following detailed description of illustrative embodiments thereof to be read in conjunction with the accompanying drawings, in which like reference numerals are used to identify the same or similar parts in the several views.
Figs. 1A and 1B are schematic diagrams showing, respectively, cordless telephone systems each having a telephone answering machine function according to the prior art;
Fig. 2 is a schematic diagram of a protocol used to explain a fundamental principle of the present invention;
Fig. 3 is a systematic block diagram showing an overall circuit arrangement of a first embodiment of a cordless telephone according to the present invention;
Fig. 4 is a schematic diagram showing a TAM unit used in the cordless telephone shown in Fig. 3;
Fig. 5A is a flowchart to which references will be made in explaining a reproducing operation of a business message by a handset unit;
Fig. 5B is a flowchart to which references will be made in explaining operation of a base unit when the business message is reproduced by the base unit;
Fig. 5C is a flowchart to which references will be made in explaining operation of a TAM unit when the business message is reproduced by the handset unit;
Fig. 6 is a schematic representation of a signal format used in the cordless telephone of the present invention;
Fig. 7 is a schematic diagram of a connection sequence in which the user makes an outgoing call by using a handset unit;
Fig. 8 is a schematic diagram of a connection sequence in which an incoming call is received at the handset unit;
Fig. 9 is a schematic diagram of a connection sequence in which telephone conversation is finalized; and
Fig. 10 is a timing chart to which references will be made in explaining a second embodiment of the cordless telephone according to the present invention.

Prior to describing the cordless telephone of the present invention, a fundamental principle of the present invention will be explained hereinafter.

Initially, let us consider the case that the user hears the business message. When the user wants to hear the business message, the following processings (1) and (2) are required:
(1) the user must issue a command to a telephone answering machine (TAM) unit of the cordless telephone so that the TAM unit reproduces the business message; and
(2) the user hears a reproduced signal of the business message from the TAM unit.

In general, when the user supplies the TAM unit with the command as in item (1), a special signal from the TAM unit need not be received. Further, when the business message is reproduced from the TAM unit as in item (2), a command need not be supplied to the TAM unit.

In view of the aforenoted point, the present invention is intended to provide a cordless telephone having a TAM function.

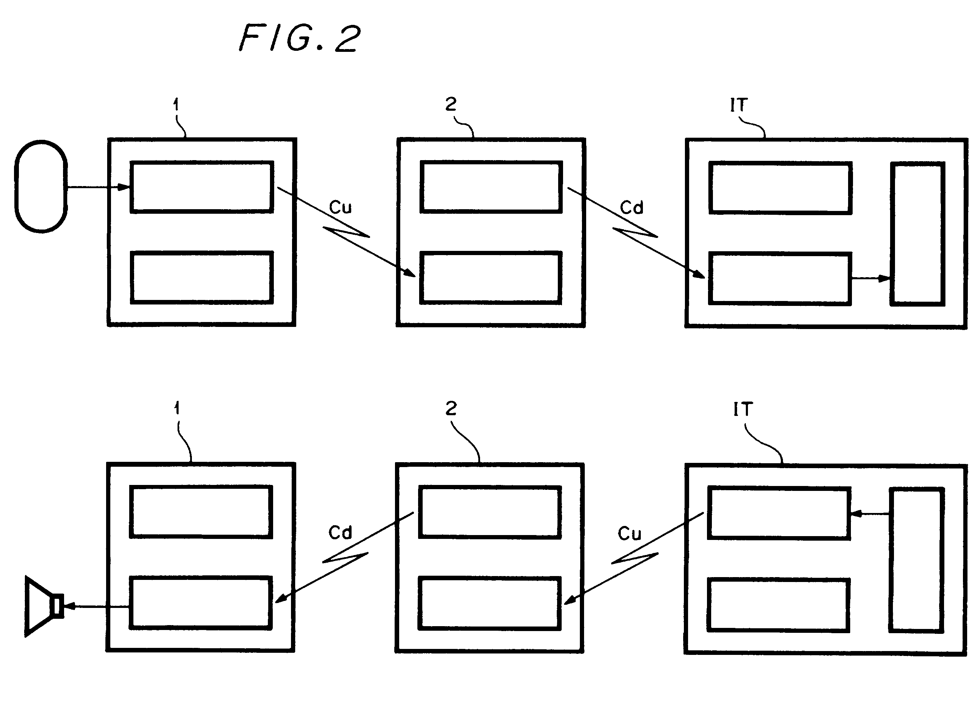

According to the present invention, as shown, for example, in Fig. 2, the handset unit 1, the base unit 2 and a handset unit 1T having the TAM function (hereinafter referred to a TAM unit 1T) constitute one set of cordless telephone system, and the reproduction of an answering message and the recording of the business message in the user's absence are both carried out by the TAM unit 1T.

The business message will be reproduced by the following operation and processing.

When the user pushes a business message playback key of the handset unit 1, a command signal instructing the reproduction of the business message is supplied to the TAM unit 1T via a signal line formed of the handset unit 1, an up channel Cu, the base unit 2, a down channel Cd and the TAM unit 1T, in that order so that the business message is reproduced by the TAM unit 1T.

Then, an audio signal of this business message is transmitted to the handset unit 1 via a signal line formed of the TAM unit 1T, the up channel Cu, the base unit 2, the down channel Cd and the handset unit 1 so that the user can hear the business message by the handset unit 1.

Incidentally, the up and down channels Cu and Cd are duplex channels which are paired, and only one duplex channel is utilized throughout the cordless telephone system of the present invention. Further, when the cordless telephone is of low power type, a control channel can be utilized and such control channel can be utilized as the channels Cu and Cd.

Therefore, according to the cordless telephone system of the present invention, the user can hear the business message only by operating a key of the handset unit in hand.

The present invention will now be described in detail with reference to the accompanying drawings. In this embodiment, a cordless telephone of the present invention is applied to a cordless telephone system of low power type now commercially available on the Japanese market.

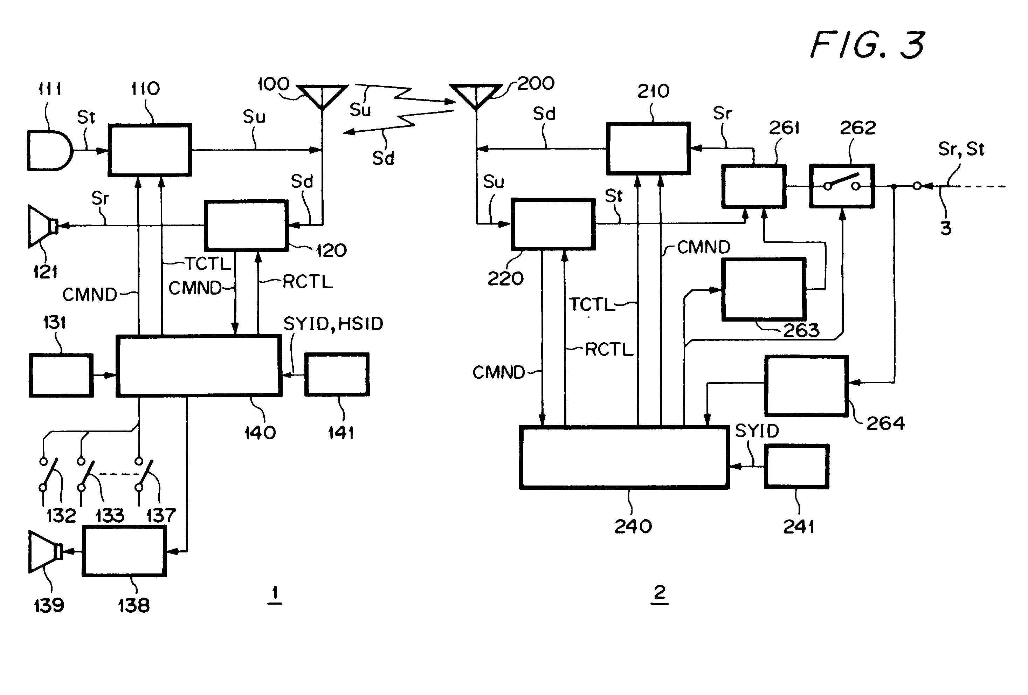

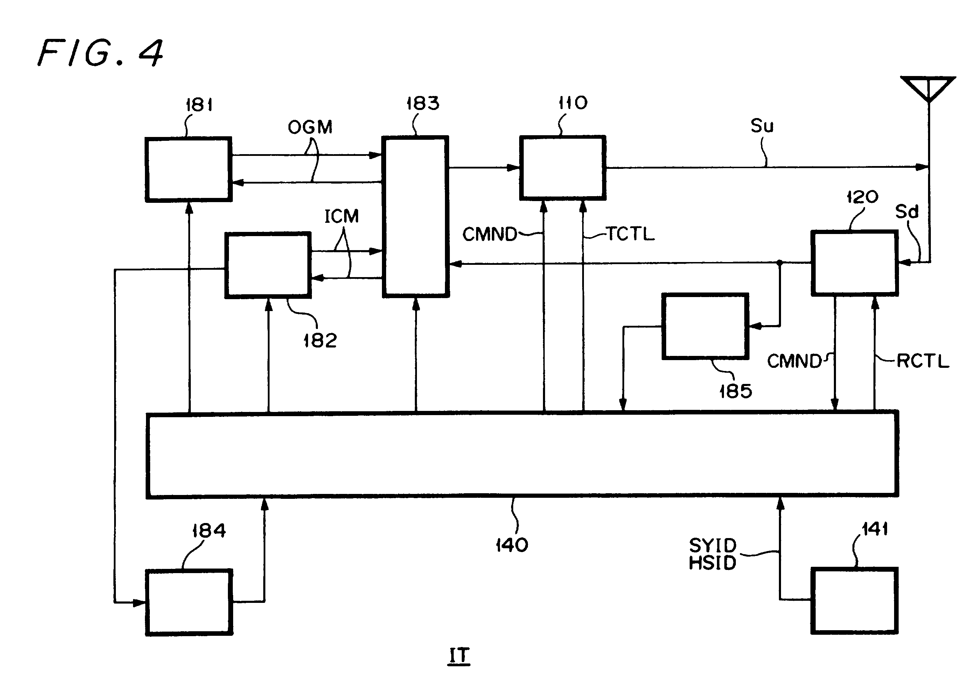

In Figs. 3 and 4, reference numeral 1 designates the handset unit for such cordless telephone system, 1T the TAM unit having an automatic answering phone function, 2 the base unit and 3 a telephone line network.

In the handset unit 1, there are provided a transmitting circuit 110 and a receiving circuit 120, and the transmitting circuit 110 converts an audio signal St and a command signal CMND (will be explained more fully later) into an FM (frequency-modulated) signal Su of up channel and transmits this FM signal Su of up channel to the base unit 2 through an antenna 100, whereas the receiving circuit 120 receives and demodulates an FM signal Sd of down channel to provide an audio signal Sr and the command signal CMND.

Further, in the handset unit 1, there are provided a dial key 131 and a talk key 132, and the talk key 132 is a nonlock-type push switch. In response to each depression of the talk key 132, the handset unit 1 is alternately changed between the standby mode and the talk mode. In the standby mode, the handset unit 1 awaits the outgoing call and receives and monitors the down channel Sd to await the connection request from the base unit 2. Whereas, in the talk mode, the handset unit 1 performs continuous reception and transmission between it and the base unit 2.

There are also provided auxiliary keys 133 to 137 such as a TAM key and so on formed of nonlock-type push switches, and reference numeral 139 denotes a speaker for a ringer and 140 a microcomputer for controlling the entire system of this handset unit 1

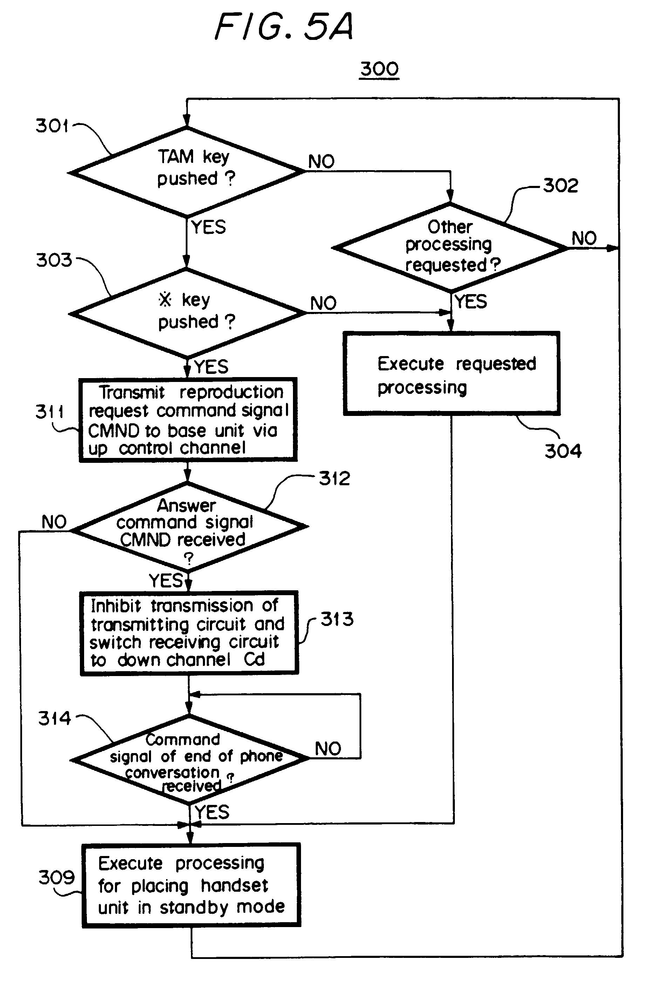

The microcomputer 140 generates the command signal CMND which is to be transmitted to the transmitting circuit 110 and determines a status of the command signal CMND derived from the receiving circuit 120. Further, the microcomputer 140 generates control signals TCTL and RCTL by which the transmission and reception of the transmitting circuit 110 and the receiving circuit 120 are permitted and inhibited and by which channels are designated. Furthermore, the microcomputer 140 has a routine 300 of a flowchart shown, for example, in Fig. 5A.

Reference numeral 141 designates a memory and this memory 141 stores therein a system identifying code SYID of 25 bits used to discriminate this cordless telephone from other cordless telephone. Further, a remote station number [1], for example, is assigned to the handset unit 1 in order to discriminate the handset unit 1 from the TAM unit 1T, and this remote station number [1] is stored in the memory 141 as a handset identifying code HSID of 4 bits. Incidentally, when there are provided more than two handset units 1, remote station numbers for the handset unit 1 following the second handset units 1 are [2] and the following figures.

On the other hand, the base unit 2 includes a transmitting circuit 210 and a receiving circuit 220 similar to the transmitting circuit 110 and the receiving circuit 120 in the handset unit 1. In the standby mode, the receiving circuit 220 awaits the incoming call from the telephone line network 3 and also receives and monitors the up channel Su to await the connection request from the handset unit 1, whereas, in the talk mode, the base unit 2 performs continuous reception and transmission between it and the handset unit 1.

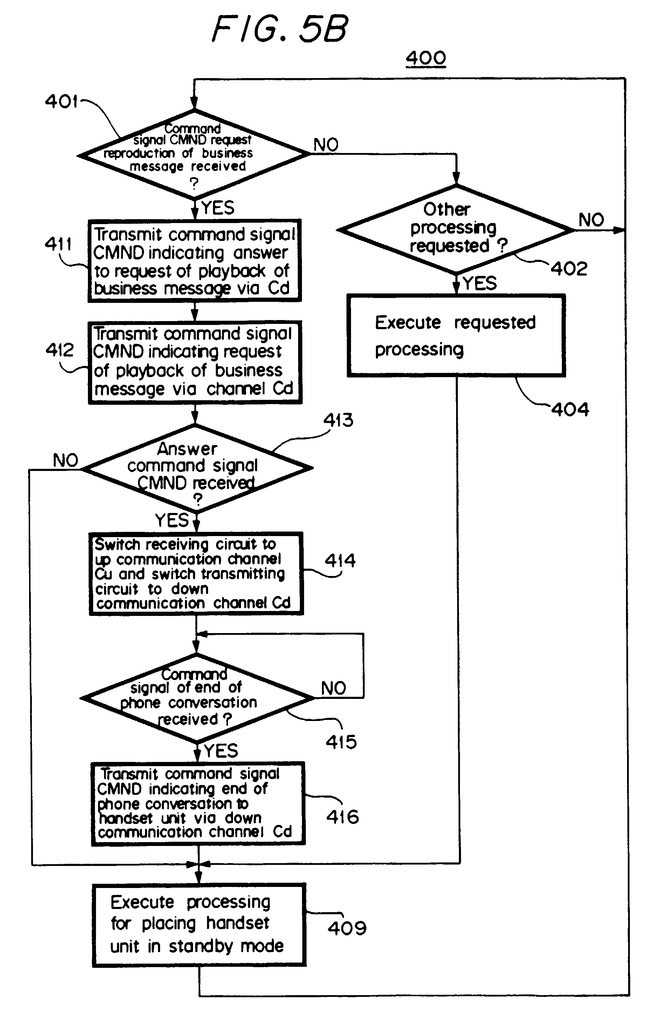

Further, in the base unit 2, reference numeral 240 denotes a system control microcomputer. This microcomputer 240 performs processing similar to that of the microcomputer 140 of the handset unit 1 and also controls operation of the whole system of this cordless telephone. Furthermore, a routine 400 of a flowchart shown, for example, in Fig. 5B is prepared in the microcomputer 240.

Reference numeral 241 designates a memory and this memory 241 corresponds with the memory 141 of the handset unit 1. The memory 241 stores therein the system identifying code SYID and is also used as an area for a TAM flag TAMF. The TAME flag is "0" when this cordless telephone is in the ordinary cordless telephone mode and is "1" when this cordless telephone is in the TAM mode.

Reference numeral 261 designates a four-to-two line converting circuit, 262 a switch circuit which corresponds with a hook switch of an ordinary telephone set, 263 a dial tone signal (i.e., DTMF signal) generating circuit and 264 a ring tone signal detecting circuit, respectively.

Fig. 4 shows an example of the TAM unit 1T. As shown in Fig. 4, the TAM unit 1T is constructed similarly to the handset unit 1 but the aforenoted elements 111, 121, 131 to 139 of the handset unit 1 are replaced with elements 181 to 185.

In that event, reference numerals 181 and 182 designate audio signal recording and reproducing apparatus, e.g., cassette type tape recorders in this embodiment. The tape recorder 181 records and reproduces the answering message and the tape recorder 182 records and reproduces the business message. Reference numeral 183 denotes a switch circuit and this switch circuit 183 is connected between the tape recorders 181, 182 and the transmitting circuit 110, the receiving circuit 120. The switch circuit 183 selectively switches audio signal lines between the tape recorders 181, 182 and the transmitting circuit 110, the receiving circuit 120 under the control of the microcomputer 140.

Further, reference numeral 184 designates a tape counter and this tape counter 184 counts or measures the tape transport amount in the tape recorder 182 from the tape top, the count value of the tape counter 184 being fed to the microcomputer 140.

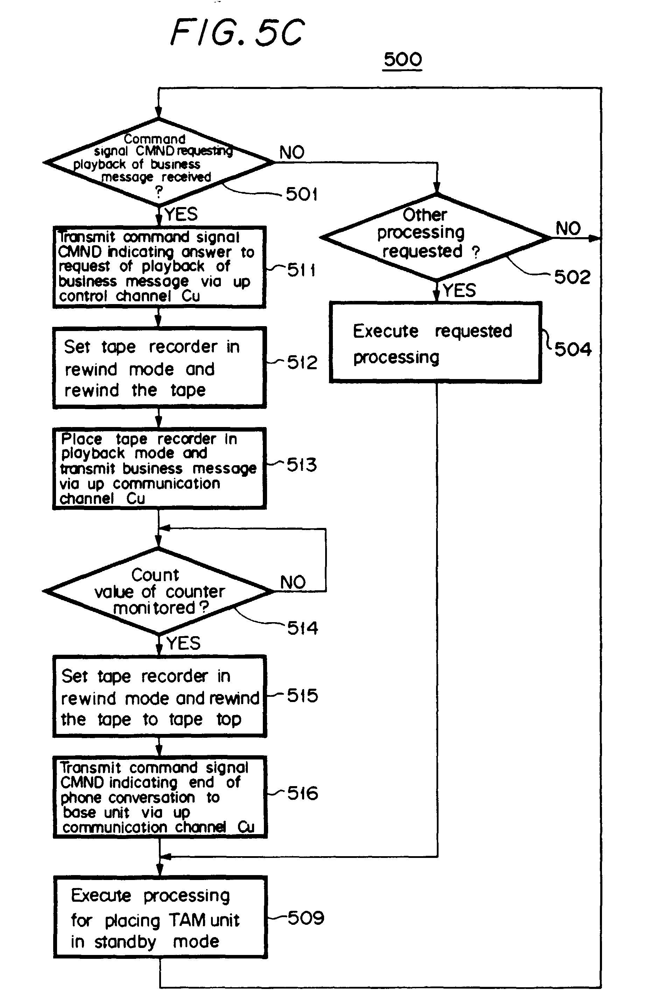

Reference numeral 185 designates a DTMF signal decoder, and the output signal of the receiving circuit 120 is supplied to this decoder 185. A remote station number and an identifying code HSID of the TAM unit 1T are selected to be, for example, [15]. Furthermore, the microcomputer 140 has a routine 500 of a flowchart shown, for example, in Fig. 5C.

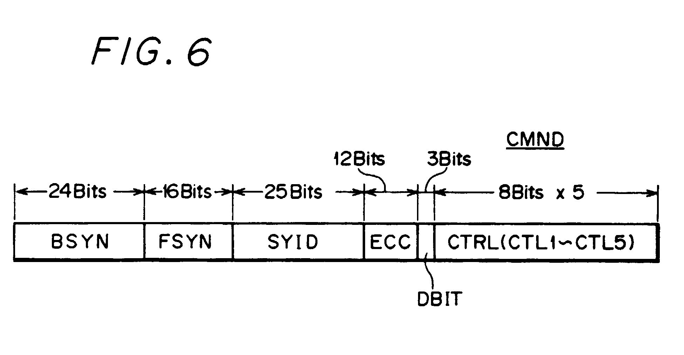

Fig. 6 shows an example of a signal format of the command signal CMND. As shown in Fig. 6, this command signal CMND includes at the head thereof a bit synchronizing (sync.) signal BSYN of 24 bits and a succeeding frame synchronizing signal FSYN of 16 bits. In that event, these signals BSYN and FSYN have particular bit patterns expressed as:
BSYN = "101010 ............ 10"
FSYN = "1100010011010110" ... up channel
FSYN = "1001001100110110" ... down channel

Further, the command signal CMND includes, behind the signal FSYN, a system identifying code SYID of 25 bits, an error correction code ECC of 12 bits for this system identifying code SYID, a dummy bit DBIT of 3 bits and a control code CTRL of 5 bytes, in that order. In that case, in the control code CTRL of 5 bytes, its first byte is used as a code for indicating the control contents of the handset unit 1 and the base unit 2, and the second to fifth bytes are used as parameters or data related to the first byte.

By way of example, when the base unit 2 informs the handset unit 1 of the channel number of the communication channel, the control code CTL1 indicates the information of the communication channel, the control code CTL2 indicates the identifying code HSID of the handset unit 1 to be called, the control code CTL3 indicates the channel number of the communication channel and CTL4 and CTL5 indicate dummy data.

When the handset unit 1, the TAM unit 1T or the base unit 2 receives the command signal CMND, the microcomputer 140 or 240 determines whether or not the identifying code SYID (and HSID) involved in the command signal CMND is coincident with the identifying code SYID stored in its own memory 141 or 241. Only when they are coincident, that command signal CMND is made valid whereas when not, that command signal CMND is made invalid.

In the standby mode, the handset unit 1 awaits the outgoing call and also receives and monitors the down control channel to await the connection request from the base unit 2. The TAM unit 1T also receives and monitors the down control channel to await the connection request from the base unit 2.

Further, the base unit 2 awaits the incoming call from the telephone line network 3 and also receives and monitors the up control channel to await the connection request from the handset unit 1.

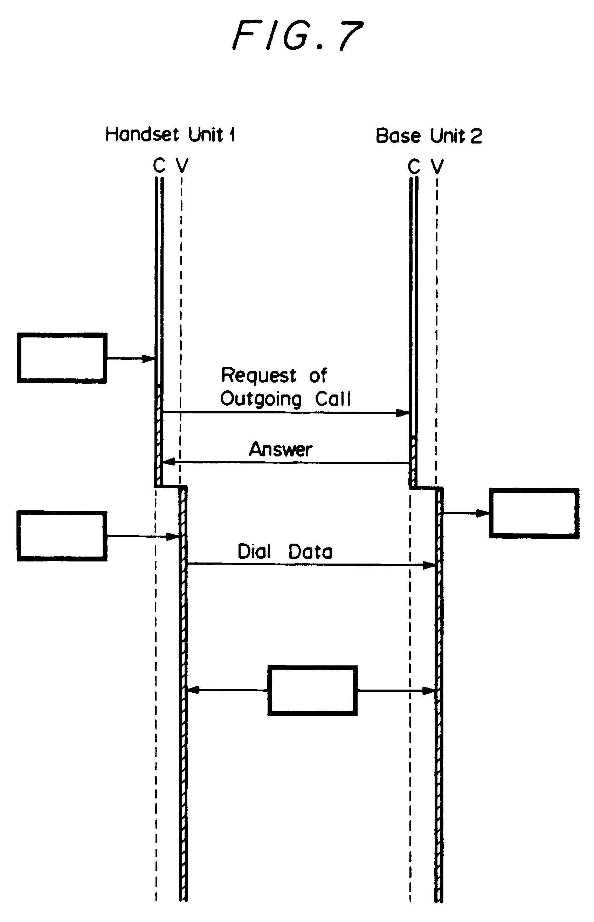

The user can make an outgoing call to the outside line from the handset unit 1 as shown by a connection sequence of Fig. 7. In Fig. 7, solid lines in the vertical direction represent the channels used by the handset unit 1 and the base unit 2, and reference letter C designates a control channel while V a communication channel. When the solid lines, which indicate the channels, are not hatched, the handset unit 1 and the base unit 2 are in the receiving condition under the standby mode, whereas when the solid lines are hatched, the handset unit 1 and the base unit 2 are set in the talk mode or the like and are allowed to perform the transmission. In Fig. 7, the time axes are not linear for convenience sake of drawing.

When the handset unit 1 is in the standby mode, if the user pushes the talk key 132, such depression of the talk key 132 is detected by the microcomputer 140 and a transmission control signal TCTL is supplied from the microcomputer 140 to the transmitting circuit 110 so that the transmitting circuit 110 and the receiving circuit 120 are allowed to perform transmission and reception in the control channel, thereby the handset unit 1 being placed in the talk mode. Further, in the microcomputer 140, the command signal CMND whose control code CTRL indicates the outgoing call request and the identifying code HSID is generated, and this command signal CMND indicative of the outgoing call request is supplied to the transmitting circuit 110.

Accordingly, in the transmitting circuit 110, the command signal CMND is converted to an FM signal (FSK signal) Su of up control channel and this FM signal Su is transmitted through the antenna 100 to the base unit 2.

Then, in the base unit 2, the FM signal (radio waves) Su is received at an antenna 200 and a command signal CMND is demodulated from the FM signal Su by the receiving circuit 220 because the base unit 2 is in the state of receiving and monitoring the up control channel. This command signal CMND is supplied to the microcomputer 240 and the microcomputer 240 determines whether or not the identifying code SYID involved in this command signal CMND is coincident with the identifying code SYID stored in the memory 241.

In that case, since they are coincident and the outgoing call is requested by the handset unit 1, the microcomputer 240 transmits the transmission control signal TCTL to the transmitting circuit 210 to allow the transmitting circuit 210 to perform transmission in the down control channel. Further, the microcomputer 240 generates a command signal CMND whose control code TCRL indicates the permission of the outgoing call, the identifying code HSID and the channel number of the communication channel, and this command signal CMND indicative of the outgoing call request is supplied to the transmitting circuit 210.

Accordingly, in the transmitting circuit 210 of the base unit 2, the command signal CMND is converted to the FM signal Sd of the down control channel, and this signal Sd is transmitted through the antenna 200 to the handset unit 1 and the TAM unit 1T.

In the handset unit 1, when the FM signal Sd is transmitted thereto from the base unit 2 through the down control channel, this FM signal Sd is received at the antenna 100 and fed to the receiving circuit 120, whereas the command signal CMND is output from the receiving circuit 120 and fed to the microcomputer 140.

Then, since the identifying codes SYID and HSID involved in the command signal CMND are coincident with the identifying codes SYID and HSID stored in the memory 141, the transmitting circuit 110 and the receiving circuit 120 are switched to the communication channel of the channel number indicated by the control signal CTRL of the received command signal CMND under the control of the control signals TCTL and RCTL.

Further, in the base unit 2, when the handset unit 1 is given the communication channel by the command signal CMND, then the microcomputer 240 supplies the transmission control signal TCTL and the reception control signal RCTL to the transmitting circuit 210 and the receiving circuit 220 to thereby switch the transmitting circuit 210 and the receiving circuit 220 to the communication channel of the channel number instructed to the handset unit 1 by the microcomputer 240.

Accordingly, a communication channel is opened between the handset unit 1 and the base unit 2.

In that event, in the remaining TAM unit 1T, the FM signal Sd transmitted from the base unit 2 is received but the TAM unit 1T still remains in the standby mode of the down control channel because the identifying code HSID transmitted thereto is not coincident with its own identifying code HSID.

Furthermore, in the base unit 2, the switching circuit 262 is set in the off-hook condition so that the transmitting circuit 210 and the receiving circuit 220 are connected to the telephone line network 3 via the converting circuit 261 and the switch circuit 262.

Accordingly, the handset unit 1 is connected to the telephone line network 3 via the communication channel and the base unit 2.

When the person who makes an outgoing call operates the dial key 131 of the handset unit 1 to input the phone number of the party to be called, then a command signal CMND whose control code CTRL indicates the transmission of the phone number and the corresponding phone number is generated, and this command signal CMND is converted to the FM signal Su of the communication channel and transmitted.

Accordingly, in the base unit 2, such command signal CMND is obtained from the receiving circuit 220 but the generating circuit 263 is controlled in accordance with the phone number by the microcomputer 240 because the control code CTRL of this command signal CMND indicates the transmission of the phone number and the corresponding phone number. Therefore, the generating circuit 263 generates a dial tone signal corresponding to the phone number transmitted from the handset unit 1 and this dial tone signal is transmitted through the converting circuit 261 and the switch circuit 262 to the telephone line network 3.

When the called phone is answered, then the audio signal Sr from the called party is supplied to the transmitting circuit 210 via a signal line formed of the telephone line network 3, the switch circuit 262 and the converting circuit 261. Accordingly, this signal Sr is converted into the FM signal Sd of down channel and this signal Sd is transmitted from the antenna 200 to the handset unit 1.

This signal Sd is received by the handset unit 1 and the audio signal Sr is derived from the receiving circuit 120, this signal Sr being fed to a telephone receiver 121.

Upon transmission, the audio signal St from a telephone transmitter 111 is supplied to the transmitting circuit 110, in which it is converted to the FM signal Su of up channel, and this FM signal Su is transmitted from the antenna 100 to the base unit 2.

The FM signal Su is received by the base unit 2 and a signal St is derived from the receiving circuit 220. This signal St is supplied through the converting circuit 261 and the switch circuit 262 to the telephone line network 3 and is then transmitted to the other party.

Accordingly, a communication channel is opened between the handset unit 1 and the base unit 2, thus making it possible to make a phone conversation between the other party and the handset unit 1.

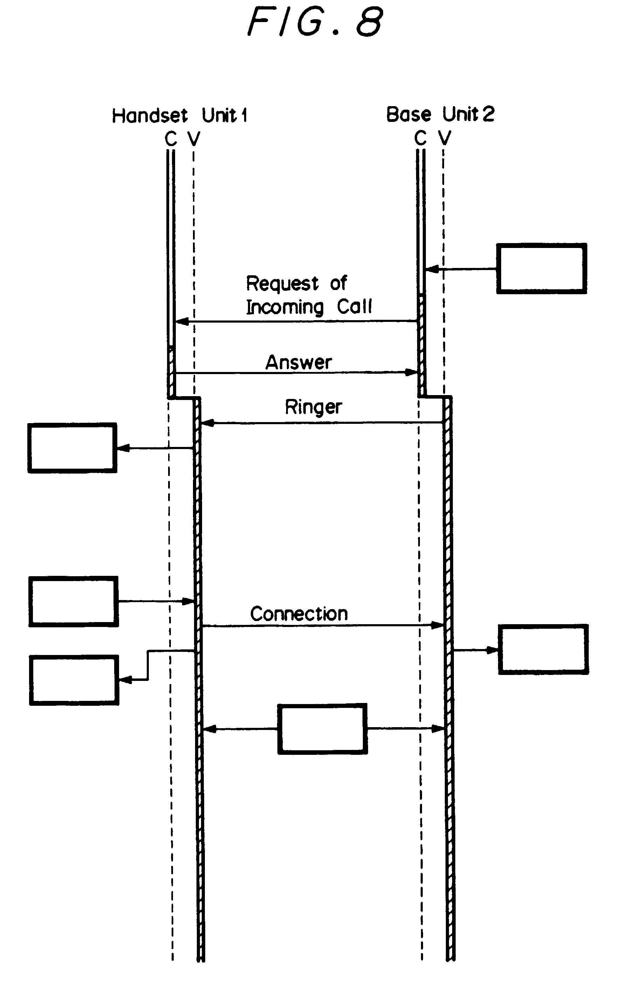

An incoming call is generally received by the handset unit 1 as shown by a connection sequence of, for example, Fig. 8.

When an incoming call is arrived through the telephone line network 3, a ring tone signal indicative of such incoming call is detected by the detecting circuit 264, and a detected signal is supplied to the microcomputer 240.

Then, the status of the TAM flag TAMF in the memory 241 is checked, and in that case, such incoming call is an ordinary one and the TAM flag TAMF = 0 is established, and subsequently, the command signal CMND whose control code CTRL indicates the arrival of the incoming call and the identifying code SHID of the handset unit 1 and the channel number of the communication channel is generated by the microcomputer 240. This incoming call command signal CMND is transmitted from the base unit 2 through the down control channel.

In the handset unit 1, it is determined whether or not the transmitted identifying codes SYID and HSID are coincident with those of the handset unit 1. In that case, they are coincident with each other so that the transmission of the FM signal Su is permitted and that a command signal CMND whose control code CTRL indicates the answer to the incoming call and the handset unit identifying code HSID is generated. This command signal CMND is transmitted to the base unit 2 through the up control channel.

In the base unit 2, when the command signal CMND indicative of the answer to the incoming call is received, the channel thereof is switched to the communication channel instructed to the handset unit 1.

In the handset unit 1, when the command signal CMND indicative of the answer to the incoming call is transmitted, then the channel thereof is switched to the communication channel instructed by the base unit 2.

Although the command signal CMND indicative of the arrival of the incoming call from the base unit 2 is received by the TAM unit 1T, the identifying codes HSID are not coincident with each other so that the command signal CMND indicative of the incoming call request from the base unit 2 is neglected.

Then, in the base unit 2, a command signal CMND whose control code CTRL indicates the actuation of the ringer is generated and this command signal CMND is transmitted via the communication channel.

In the handset unit 1, when the ringer command signal CMND is received, then the microcomputer 140 controls the oscillation circuit 138 to generate the ringer signal, and this ringer signal is supplied to the loudspeaker 139. Then, the loudspeaker 139 emanates a ringing sound to announce the arrival of the incoming call.

In the handset unit 1, when the talk key 132 is depressed, a command signal CMND of the answer to the called phone whose control code CTRL indicates the answer to the called phone, the identifying code HSID, a depression of any one of the keys 132 to 137 and that the depressed key is the talk key 132 is generated, and this command signal CMND is transmitted. Simultaneously, the oscillation circuit 138 in the handset unit 1 is turned OFF and the ringer also is turned OFF.

When the command signal CMND from the handset unit 1 is received by the base unit 2, then the microcomputer 240 controls the switch circuit 262 of the base unit 2 to place the same in the off-hook state, accordingly, the base unit 2 is connected to the telephone line network 3.

Therefore, a communication channel is opened between the handset unit 1 and the base unit 2 and hence, a telephone conversation can be made between the called party and the handset unit 1.

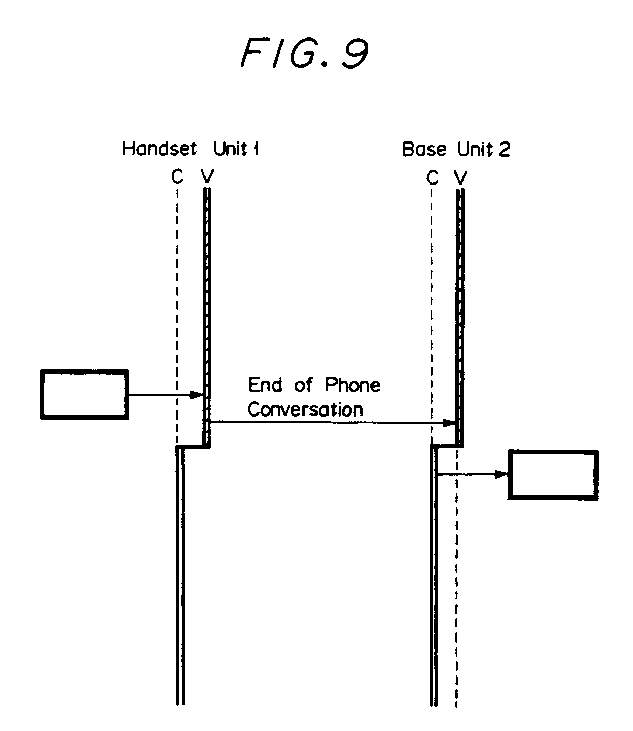

When the telephone conversation is finished, as shown, for example, in Fig. 9, if the talk key 132 of the handset unit 1 is depressed, then a command signal CMND whose control code CTRL is indicative of the end of the telephone conversation and the identifying code HSID is generated, and this command signal CMND indicative of the end of the telephone conversation is transmitted to the base unit 2 via the FM signal Su of the communication channel.

Then, the receiving circuit 220 in the base unit 2 derives such command signal CMND and the microcomputer 240 determines that the telephone conversation is ended. As a consequence, the transmission in the transmitting circuit 210 of the base unit 2 is inhibited by the control signal TCTL and the receiving circuit 220 is set in the receiving mode of the up control channel by the control signal RCTL. Further, the switch circuit 262 also is set in the on-hook state, and accordingly, the base unit 2 is placed in the standby mode.

Further, also in the handset unit 1, after the command signal CMND indicative of the end of the telephone conversation is transmitted, the transmission in the transmitting circuit 110 is inhibited by the control signal TCTL, and the receiving circuit 120 is set in the standby mode for the down control channel by the control signal RCTL.

When the handset unit 1 is in the standby mode, the TAM key 133 of the auxiliary keys 133 to 137 is pushed and [1] key of the dial key pad 131 is pushed.

Then, a command signal CMND whose control code CTRL indicates that the TAM flag TAMF of the memory 141 should be set to "1" and the identifying code HSID of the handset unit 1 is generated and this command signal CMND is transmitted to the base unit 2 via the up control channel.

In the base unit 2, when that command signal CMND is transmitted thereto, such command signal CMND is received similarly to the case of making an outgoing call, and in that case, the TAM flag TAMF of the memory 241 is set to "1" in accordance with such command signal CMND. Then, a command signal CMND whose control code CTRL indicates that the TAM flag TAMF is set to "1" and the identifying code HSID of the handset unit 1 is generated, and this command signal CMND is transmitted via the down control channel. Thereafter, the base unit 2 is placed in the standby mode.

Further, in the handset unit 1, when the command signal CMND indicating that the TAM flag TAMF is set to "1" is received, the handset unit 1 is set in the standby mode one more time.

When the handset unit 1 is in the standby mode, the TAM key 133 of the auxiliary keys 133 to 137 is pushed and [0] key of the dial key pad 131 is pushed.

Then, the TAM flag TAME of the memory 141 is reset to "0" similarly to the above-mentioned case that the TAM flag TAMF is set to "1".

An incoming call will be answered in the TAM mode as follows.

In that case, the TAM is set and TAMF = "1" is established. When the incoming call is arrived via the telephone line network 3, this incoming call is detected by the detecting circuit 264 as described above. In that case, TAMF = "1" is established so that a command signal CMND whose control code CTRL indicates the arrival of the incoming call, the identifying code HSID of the TAM unit 1T and the channel number of the communication channel is generated, and this command signal CMND is transmitted to the TAM unit 1T via the down control channel.

Thereafter, in a like fashion that an ordinary incoming call is received as shown in the connection sequence of Fig. 8, the transmission and reception of the command signal CMND indicative of the answer to the incoming call are performed between the TAM unit 1T and the base unit 2, and the control channel is switched to the communication channel, whereby the TAM unit 1T and the base unit 2 are connected through the communication channel. Also, after the incoming call is counted, a command signal CMND is transmitted from the TAM unit 1T to the base unit 2 and hence, the base unit 2 is connected to the telephone line network 3 through the switch circuit 262.

Accordingly, the TAM unit 1T is set in a communication mode from now on from a handset unit 1 standpoint.

Then, the microcomputer 140 of the TAM unit 1T causes the tape recorder 181 to be placed in the playback mode so that the reproduction of the answer message is started. An audio signal OGM of this answer message is supplied to the transmitting circuit 110 from the tape recorder 181 through the switch circuit 183. Accordingly, the answer message signal OGM is transmitted to the telephone line network 3 via the base unit 2, thus making it possible for the other party to hear the answer message.

When the answer message is reproduced thoroughly, the tape recorder 181 is set in the stop mode and the microcomputer 140 causes the tape recorder 182 to be placed in the recording mode, thereby the recording being started.

When the other party tells a business message, an audio signal ICM indicative of such business message is transmitted through the base unit 2 and received by the receiving circuit 120 in the TAM unit 1T. The thus received audio signal ICM is supplied through the switch circuit 183 to the tape recorder 182, in which it is sequentially recorded.

During the business message is recorded in this way, in the base unit 2, it is determined on the basis of the detected output of the detecting circuit 264 whether or not the other party places his telephone set in the on-hook state.

Further, in the TAM unit 1T, when the recording of the business message is started, then it is determined whether or not the command signal CMND indicative of the end of telephone conversation is transmitted from the base unit 2.

When the other party finishes the business message and places his telephone set in the on-hook state, an AC level of the telephone line network 3 is changed (the change of this AC level is presented in the form of beep sound) and this change of AC level is detected by the detecting circuit 264. Then, the command signal CMND indicative of the end of telephone conversation is transmitted from the base unit 2 to the TAM unit 1T, and the switch circuit 262 of the base unit 2 is placed in the on-hook state and the base unit 2 is then set in the standby mode.

In the TAM unit 1T, when the command signal CMND indicative of the end of telephone conversation is transmitted thereto, the tape recorder 182 is placed in the stop mode and the tape of the answer message in the tape recorder 181 is rewound up to the tape top. Further, the TAM unit 1T is set in the standby mode via the control channel.

In this fashion, if an incoming call is arrived, in the TAM unit 1T, the answer message is reproduced from the tape and the business message is recorded on the tape.

The business message will be reproduced as follows.

When the handset unit 1 is in the standby mode, the TAM key 133 of the handset unit 1 is pushed and [*] key of the dial key pad 131 is pushed subsequently. Then, the routines 300, 400, and 500 are excuted and the business massage can be heard by the handset unit 1.

More specifically, referring to Fig. 5A, in the handset unit 1 which is in the standby mode, it is determined in decision step 301 of the routine 300 whether or not the TAM key 133 is pushed. If the TAM key 133 is not pushed as represented by a NO at decision step 301, then the processing proceeds to the next decision step 302. In decision step 302, it is determined whether or not the request of other processing such as making an outgoing call or the like exists. If not, then the processing returns from step 302 to 301. In this way, steps 301 and 302 are repeated in the standby mode.

If the request of other processing such as making an outgoing call or the like exists as represented by a YES at step 302, then the processing proceeds from step 302 to step 304, whereat the requested processing is executed. Then, the processing proceeds to step 309, and in step 309, the processing for placing the handset unit 1 in the standby mode is executed and then the processing returns to step 301.

If the TAM key 133 is depressed as represented by a YES at decision step 301, then the processing proceeds from step 301 to the next decision step 303, whereat it is determined whether or not the [*] key is pushed immediately after the TAM key 133 is pushed. If the [*] key is not pushed as represented by a NO at decision step 303, then the processing proceeds from step 303 to step 304. In step 304, the processing corresponding to the key pushed immediately after the depression of the TAM key 133 is executed. For example, if [1] key is pushed immediately after the TAM key 133 is pushed, the processing for setting the TAM flag TAMF of the base unit 2 to "1" is executed.

In that case, since the [*] key is pushed after the depression of the TAM key 133, the processing proceeds from step 303 to step 311, whereat a command signal CMND whose control code CTRL indicates the request of reproduction of business message and the identifying code HSID of the handset unit 1 is generated, and this command signal CMND is transmitted to the base unit 2 via the up control channel.

On the other hand, in the base unit 2, in its standby mode, it is determined in decision step 401 of routine 400 shown in Fig. 5B whether or not the command signal CMND requesting the reproduction of the business message is received. If the command signal CMND is not received as represented by a NO at decision step 401, then the processing proceeds from step 401 to the next decision step 402. In decision step 402, it is determined whether or not the request of other processing such as the arrival of incoming call or the like exists. If not, then the processing returns from step 402 to step 401. As described above, in the standby mode, the steps 401 and 402 are repeated.

If the request of other processing such as the arrival of incoming call or the like exists as represented by a YES at decision step 402, then the processing proceeds from step 402 to step 404, whereat the requested processing is executed. Thereafter, the processing proceeds to step 409, whereat the processing for setting the base unit 2 in the standby mode is executed and the processing returns to step 401.

However, in that case, since in step 401 the command signal CMND. which requests the reproduction of business message at step 311, is detected, the processing proceeds from step 401 to step 411, whereat a command signal CMND whose control code CTRL indicative of the answer to the request of reproduction of business message, the identifying code HSID of the handset unit 1 and the channel number Cd of the down communication channel is generated, and this command signal CMND is transmitted to the handset unit 1 via the down control channel.

Then, in the handset unit 1, step 312 is executed after step 311 is executed to thereby determine whether or not the answer command signal CMND at step 411 is received. If the command signal CMND is not received during a predetermined period as represented by a NO at decision step 312, then the processing returns from step 312 to step 309. In that event, since the answer command signal CMND at step 411 is received, the processing proceeds from step 312 to step 313, whereat the transmission in the transmitting circuit 110 of the handset unit 1 is inhibited and the receiving circuit 120 is switched to the down communication channel Cd instructed at step 411. Then, step 314 is repeatedly executed until a command signal CMND whose control code CTRL indicates the end of telephone conversation is recieved at step 314.

Accordingly, if the audio signal ICM of the business message is transmitted from the base unit 2 to the handset unit 1 via the down communication channel Cd, the user can receive and hear this business message by the handset unit 1.

Further, in the base unit 2, in step 412 after step 411, a command signal CMND whose control code CTRL indicates the request of reproduction of business message, the identifying code HSID of the TAM unit 1T and the channel number Cu of the up communication channel is generated and this command signal CMND is transmitted to the TAM unit 1T via the down control channel. In that case, the up communication channel Cu instructed to the TAM unit 1T is a channel which is paired with the down communication channel Cd instructed to the handset unit 1 in step 411.

On the other hand, in the TAM unit 1T, in the standby mode, it is determined in decision step 501 of routine 500 shown in Fig. 5C whether or not the command signal CMND whose control code CTRL indicates the request of reproduction of business message is received. If the command signal CMND is not received as represented by a NO at decision step 501, then the processing proceeds from step 501 to the next decision step 502. In decision step 502, it is determined whether or not the request of other processing such as the reproduction of answer message or the like exists. If not, then the processing returns from step 502 to step 501. As described above, steps 501 and 502 are repeated in the standby mode.

If the request of processing such as the reproduction of answer message or the like exists as represented by a YES at decision step 502, then the processing proceeds from step 502 to 504, whereat the requested processing is executed, and then the processing proceeds to step 509. In step 509, a processing for placing the TAM unit 1T in the standby mode is executed and the processing returns to step 501.

However, in that case, since the command signal CMND whose control code RCTL requests the reproduction of business message at step 412 is detected at decision step 501, then the processing proceeds from step 501 to step 511, whereat a command signal CMND whose control code CTRL indicates the answer to the request of reproduction of business message and the identifying code HSID of the TAM unit 1T is generated, and this command signal CMND is transmitted to the base unit 2 via the up control channel.

Further, in the base unit 2, step 413 is executed after step 412 to thereby determine whether or not the answer command signal CMND at step 511 is received. If such command signal CMND is not received during a predetermined period of time, then the processing returns to step 409 from step 413. In that case, since the answer command signal CMND at step 511 is received at step 413, then the processing proceeds from step 413 to step 414. In step 414, the receiving circuit 220 of the base unit 2 is switched to the up communication channel Cu suggested at step 412, and the transmitting circuit 210 is switched to the down communication channel Cd suggested at step 411. Simultaneously, the output terminal of the receiving circuit 220 is connected to the input terminal of the transmitting circuit 120 via the converting circuit 261, and decision step 415 is repeatedly executed until the command signal CMND whose control code CTRL indicates the end of telephone conversation is received.

Accordingly, from now on, if the audio signal ICM of business message is transmitted to the base unit 2 from the TAM unit 1T via the up communication channel Cu, the receiving circuit 220 can receive such audio signal ICM, and further, the thus received the audio signal ICM can be transmitted to the handset unit 1 from the transmitting circuit 210 through the down communication channel.

In that case, the up communication channel Cu and the down communication channel Cd are channels which are paired.

In the TAM unit 1T, the processing proceeds from step 511 to step 512, whereat the tape recorder 182 is set in the rewind mode to rewind the tape on which the business message is recorded to the tape top. At that time, the tape rewinding amount is counted by the counter 184, and in the next step 513, the tape recorder 182 is placed in the playback mode to sequentially play back business messages, and the audio signal ICM of the business message is supplied through the switch circuit 183 to the transmitting circuit 110 and transmitted via the up communication channel Cu.

Accordingly, since the audio signal ICM of the business message played back by the TAM unit 1T is supplied to the handset unit 1 via the signal line formed of the TAM unit 1T, the up communication channel Cu, the base unit 2, the down communication channel Cd and the handset unit 1 in that order, the user can hear business messages recorded in the TAM unit 1T sequentially by the handset unit 1.

During the business message is reproduced by the tape recorder 182, the processing of the microcomputer 140 proceeds from step 513 to the next decision step 514, and in step 514, a count value of the counter 184 is monitored.

When the tape is transported by the amount corresponding to the count value counted at step 512, or if all business messages are played back, then the processing proceeds from step 514 to step 515. In step 515, the tape recorder 182 is set in the rewind mode to rewind the tape to the tape top and placed in the stop mode. In the next step 516, a command signal CMND whose control code CTRL indicates the end of telephone conversation and the identifying code HSID of the TAM unit 1T is generated, and this command signal CMND is transmitted to the base unit 2 via the up communication channel Cu. Then, the processing proceeds to step 509 and the TAM 1T enters the standby mode.

In the base unit 2, when the command signal CMND whose control code CTRL indicates the end of telephone conversation from the TAM unit 1T is transmitted thereto, this command signal CMND is detected at step 415, and the processing proceeds from step 415 to step 416. In step 416, a command signal CMND whose control code CTRL indicates the end of telephone conversation and the identifying code HSID of the handset unit 1 is generated, and this command signal CMND is transmitted to the handset unit 1 via the down communication channel Cd. Then, the processing proceeds to step 409 and the base unit 2 enters the standby mode.

Further, in the handset unit 1, when the command signal CMND whose control code CTRL indicates the end of telephone conversation is transmitted thereto from the base unit 2, this command signal CMND is detected at step 314, and the processing proceeds from step 314 to step 309, whereat the handset unit 1 enters the standby mode.

The answer message will be recorded on the tape as follows.

When the handset unit 1 is in the standby mode, the TAM key 133 of the handset unit 1 is pushed and then [#] key of the dial key pad 131 is pushed.

Then, in a like manner that the business message is reproduced as described above, the signal line composed of the handset unit 1, the up communication channel Cu, the base unit 2, the down communication channel Cd and the TAM unit 1T is formed in that order.

Accordingly, if the user tells the answer message to the telephone transmitter (microphone) 111 of the handset unit 1, then the audio signal OGM of such answer message is supplied to the TAM unit 1T from the handset unit 1 through the base unit 2, and recorded on the tape of the tape recorder 181.

If the talk key 132 of the handset unit 1 is pushed at the completion of the answer message, then the command signal CMND whose control code CTRL indicates the end of telephone conversation is transmitted to the base unit 2 from the handset unit 1. Then, in the same manner as that of reproducing the business message, the telephone conversation finalizing processing is executed in the handset unit 1, the base unit 2 and the TAM unit 1T, and thereafter they are all placed in the standby mode.

As described above, according to the present invention, the user can hear the business message by the handset unit 1. In that event, particularly according to this invention, the user need not reach to the base unit or handset unit having the TAM function and also need not push the operation button thereof in order to hear the business message, which ensures advantage of the cordless telephone system.

Further, the base unit 2 needs only a pair of transmitting circuit 210 and receiving circuit 220 and special transmitting circuit and special receiving circuit need not be prepared for the TAM unit 1T. Thus, even in the case that the allocation of channels is restricted by the regulations such as FCC or the like, the cordless telephone system of the present invention can be utilized without trouble. Alternatively, after the user bought the handset unit 1 and the base unit 2, the user can buy the TAM unit 1T additionally.

In addition, since the TAM unit 1T is provided independently of the handset unit 1 and the base unit 2, the TAM unit 1T may be freely located at any place so long as it is located within the service area of the base unit 2. For example, the TAM unit 1T may be located at the place which does not interrupt the way, such as the corner of the room or the like.

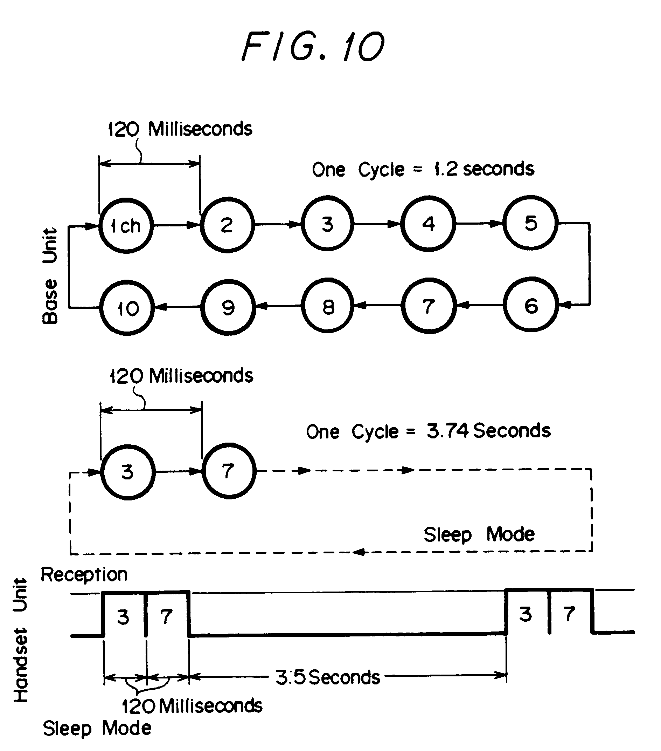

A second embodiment of the cordless telephone according to the present invention will be described below with reference to Fig. 10.

In the Unites States of America, 10 duplex channels from first to tenth channels are prepared for a cordless telephone but a control channel is not prepared. Also, in Japan, a control channel is not prepared for a cordless telephone of low power type, and in the cordless telephone having no control channel, the handset unit 1 or the TAM unit 1T and the base unit 2 might be connected to each other as shown in Fig. 10.

More specifically, since the base unit 2 is operated by a commercially available AC power, in the standby mode, the base unit 2 sequentially receives and monitors the first to tenth channels, and the base unit 2 constantly repeats the reception and monitoring to await the connection request from the handset unit 1. At that time, the base unit 2 needs about 120 milliseconds per channel to detect the connection request from the handset unit 1.

Accordingly, the handset unit 1 can request the connection to the base unit 2 by utilizing an arbitrary channel of the first to tenth channels.

Further, in the standby mode, the handset unit 1 receives and monitors a vacant channel, e.g., the third channel and the seventh channel to check the presence or absence of the connection request from the base unit 2. If the connection request from the base unit 2 is not presented, then the handset unit 1 enters the sleep mode of about 3.5 seconds. A series of the aforenoted operation is repeatedly executed by the handset unit 1. Therefore, the base unit 2 can request the connection to the handset unit 1 by utilizing the third channel or the seventh channel.

In the standby mode, the handset unit 1 is placed in the sleep mode in most period of the standby mode so that the consumption of power can be suppressed.

Further, the TAM unit 1T is operated similarly to the base unit 2.

When reproducing the business message, as shown in Fig. 2, the handset unit 1, the base unit 2 and the TAM unit 1T are connected one another by utilizing the up and down control channels Cu and Cd.

In a third embodiment of the present invention, there can be provided a plurality of handset units 1 and the TAM units 1T. In that case, a plurality of handset units 1 and a plurality of TAM units 1T can be discriminated from each other by utilizing the identifying code HSID, and particular handset unit 1 and particular TAM unit 1T can be paired.

## Claims

1. A cordless telephone comprising:
a base unit (2) having a transmitting circuit (210) and a receiving circuit (220) and being connected to a telephone line network (3);
at least one portable handset unit (1) having a transmitting circuit (110), a receiving circuit (120) and a telephone answering machine operation key (133) to operate a telephone answering machine (TAM);
the telephone answering machine (TAM) having an audio signal recording and reproducing apparatus (181, 182) wherein, in a normal communication mode, audio signals of said handset unit (1) are accessed to said telephone line network (3) through said transmitting circuit (110) and said receiving circuit (120) of said handset unit (1) and said transmitting cirucit (210) and said receiving circuit (220) of said base unit (2) and, in an automatic answering mode, an audio signal recorded in said recording and reproducing apparatus (181, 182) is supplied to said handset unit (1) in response of operation of said telephone answering machine operation key (133),
**characterized in that**
the telephone answering machine (TAM) is located in a portable telephone answering machine unit (1T) separated from the base unit (2) and linked to the base unit (2) through radio channels (Cd, Cu), comprising a transmitting circuit (110) and a receiving circuit (120), wherein, in the automatic answering mode, an audio signal from said telephone line network (3) is recorded in said recording and reproducing apparatus (181, 182) through said transmitting circuit (210) of said base unit (2) and said receiving circuit (120) of said telephone answering machine unit (1T),
whereby the cordless telephone is arranged such that when the telephone answering machine operation key (133) of said handset unit (1) is operated, a control signal indicative of such key operation is supplied to said recording and reproducing apparatus (181, 182) through a signal line formed of said transmitting circuit (110) of said handset unit (1), said receiving circuit (220) of said base unit (2), said transmitting circuit (210) of said base unit (2) and said receiving cirucit (120) of said telephone answering machine unit (1T) in that order so that said recording and reproducing apparatus (181, 182) is placed in a reproduction mode, in said reproduction mode, said audio signal recorded in said recording and reproducing apparatus (181, 182) is reproduced from said recording and reproducing apparatus (181, 182) and said reproduced audio signal is supplied to said handset unit (1) through a signal line formed of said transmitting circuit (110) of said telephone answering machine unit (1T), said receiving circuit (220) of said base unit (2), said transmitting circuit (210) of said base unit (2) and said receiving circuit (120) of said handset unit (1).

## Patentansprüche

1. Schnurloses Telefon das folgendes aufweist:
eine Basiseinheit (2) mit einer Übertragungsschaltung (210) und einer Empfangsschaltung (220) und einer Verbindung zu einem Femsprechleitungsnetz (3);
zumindest eine transportable Handgeräteeinheit mit einer Übertragungsschaltung (110), einer Empfangsschaltung (120) und eine Anrufbeantworter-Betriebstaste (133) zur Bedienung eines Anrufbeantworters (TAM);
wobei der Anrufbeantworter (TAM) ein Audiosignalaufzeichnungs- und Wiedergabegerät (181, 182) aufweist, worin in einem normalen Kommunikationsmode Audiosignale der Handgeräteinheit (1) auf das Femsprechleitungsnetz (3) über die Übertragungsschaltung (110) und die Empfangsschaltung (120) der Handgeräteeinheit (1) und über die Übertragungsschaltung (210) und die Empfangsschaltung (220) der Basiseinheit (2) zugreifen, und in einem automatischen Beantwortungsmode ein in dem Aufzeichnungs- und Wiedergabegerät (181, 182) aufgezeichnetes Audiosignal der Handgeräteeinheit (1) auf die Betätigung der Anrufbeantworter-Betriebstaste (133) zugeführt wird,
**dadurch gekennzeichnet, dass**
der Anrufbeantworter (TAM) in einer transportablen Anrufbeantwortereinheit (1T) getrennt von der Basiseinheit (2) untergebracht ist und über die Radiokanäle (Cd, Cu) mit der Basiseinheit (2) verbunden ist, eine Übertragungsschaltung (110) und eine Empfangsschaltung (120) aufweist, worin in dem automatischen Beantwortungsmode ein Audiosignal von dem Femsprechleitungsnetz (3) in das Aufzeichnungs- und Wiedergabegerät (181, 182) durch die Übertragungsschaltung (210) der Basiseinheit (2) und die Empfangsschaltung (120) der Anrufbeantwortereinheit (1T), aufgezeichnet wird,
wobei das schnurlose Telefon derart eingerichtet ist, dass, wenn die Anrufbeantworter-Betriebstaste (133) der Handgeräteeinheit (1) betätigt wird, ein die Tastenbetätigung anzeigendes Steuersignal dem Aufzeichnungs- und Wiedergabegerät (181, 182) durch eine Signalleitung zugeführt wird, die gebildet wird von der Übertragungsschaltung (110) der Handgeräteeinheit (1), der Empfangsschaltung (220) der Basiseinheit (2), der Übertragungsschaltung (210) der Basiseinheit (2) und der Empfangsschaltung (120) der Anrufbeantwortereinheit (1T) in der Reihenfolge, daß das Aufzeichnungs- und Wiedergabegerät (181, 182) in einen Wiedergabemode versetzt wird, und in dem Wiedergabemode das in dem Aufzeichnungs- und Wiedergabegerät (181, 182) aufgezeichnete Audiosignal von dem Aufzeichnungs- und Wiedergabegerät (181, 182) wiedergegeben wird und dieses wiedergegebene Audiosignal der Handgeräteeinheit (1) über eine Signalleitung zugeführt wird, die dargestellt wird durch die Übertragungsschaltung (110) der Anrufbeantwortereinheit (1T), der Empfangsschaltung (220) der Basiseinheit (2), der Übertragungsschaltung (210) der Basiseinheit (2) und der Empfangsschaltung (120) der Handgeräteeinheit (1).

## Revendications

1. Téléphone sans fil, comprenant :
une unité base (2) qui possède un circuit d'émission (210) et un circuit de réception (220) et qui est connectée à un réseau de lignes téléphoniques (3) ;
au moins une unité combiné portatif (1) qui possède un circuit d'émission (110), un circuit de réception (120) et une touche (133) d'activation de répondeur téléphonique servant à activer un répondeur téléphonique (TAM) ;
le répondeur téléphonique (TAM) possédant un appareil (181, 182) d'enregistrement et de reproduction de signal audio, où dans un mode communication normale, des signaux de ladite unité combiné (1) font accès audit réseau de lignes téléphoniques (3) via ledit circuit d'émission (110) et ledit circuit de réception (120) de ladite unité combiné (1) et ledit circuit d'émission (210) et ledit circuit de réception (220) de ladite unité base (2) et, dans un mode répondeur automatique, un signal audio enregistré dans ledit appareil d'enregistrement et de reproduction (181, 182) est fourni à ladite unité combiné (1) en réponse à l'actionnement de ladite touche (133) d'activation de répondeur téléphonique,
caractérisé en ce que le répondeur téléphonique (TAM) est placé dans une unité répondeur téléphonique portatif (1T) séparée de l'unité base (2) et reliée à l'unité base (2) via des canaux radio (Cd, Cu), comprenant un circuit d'émission (110) et un circuit de réception (120), où, dans le mode répondeur automatique, un signal audio venant dudit réseau de lignes téléphoniques (3) est enregistré dans ledit appareil d'enregistrement et de reproduction (181, 182) via ledit circuit d'émission (210) de ladite unité base (2) et ledit circuit de réception (120) de ladite unité répondeur téléphonique (1T),
si bien que le téléphone sans fil est conçu de façon que, lorsqu'on actionne la touche (133) d'activation du répondeur téléphonique de ladite unité combiné (1), un signal de commande indicatif de cet actionnement de touche soit fourni audit appareil d'enregistrement et de reproduction (181, 182) via une ligne de signaux formée dudit circuit d'émission (110) de ladite unité combiné (1), dudit circuit de réception (220) de ladite unité base (2), dudit circuit d'émission (210) de ladite unité base (2) et dudit circuit de réception (120) de ladite unité répondeur téléphonique (1T), dans cet ordre, de sorte que ledit appareil d'enregistrement et de reproduction (181, 182) soit placé dans un mode reproduction, dans ledit mode reproduction, ledit signal audio enregistré dans ledit appareil d'enregistrement et de reproduction (181, 182) soit reproduit à partir dudit appareil d'enregistrement et de reproduction (181, 182) et ledit signal audio reproduit soit fourni à ladite unité combiné (1) via une ligne de signaux formée dudit circuit d'émission (110) de ladite unité répondeur téléphonique (1T), dudit circuit de réception (220) de ladite unité base (2), dudit circuit d'émission (210) de ladite unité base (2) et dudit circuit de réception (120) de ladite unité combiné (1).
